# EUROPEAN PATENT SPECIFICATION

(11) **EP 1 067 540 B1**
(45) Date of publication and mention of the grant of the patent: **09.06.2004**
(21) Application number: 00114448.4
(22) Date of filing: 05.07.2000
(51) Int. Cl.: G11B 20/00, G11B 20/10, G06F 1/00

(54) **Copy protection by adding copy control information**
Kopierschutz durch Beifügung von Kopierkontrollinformationen
Protection contre la copie par incorporation d'information de contrôle

(30) Priority: 06.07.1999 JP 19230799
(43) Date of publication of application: 10.01.2001
(73) Proprietor: Pioneer Corporation, Meguro-ku, Tokyo (JP)
(72) Inventor: Suzuki, Toshio, c/o Pioneer Tokorozawa Plant, Tokorozawa-city, Saitama (JP)
(74) Representative: Manitz, Finsterwald & Partner

(56) References cited:
- EP-A- 0 860 823
- EP-A- 0 938 091
- EP-A- 0 959 467
- EP-A- 1 032 204
- WO-A-99/22372

## Description

### BACKGROUND OF THE INVENTION

### 1. Field of the Invention:

The present invention relates to a recording medium for recording content data such as image data, and a reproduction apparatus therefor.

### 2. Description of the Related Arts:

In recent years, the techniques for preventing the unauthorized copy of content data have been developed energetically so as to protect the copyright of information data including image and audio signals stored on a recording medium by a digital recording system (designated as content data hereinafter). Especially, a DVD (digital video disk or digital versatile disk) system adopts a digital recording system. Therefore, even if the digital content data of a DVD is duplicated repeatedly, the quality of the duplicated content data is not substantially deteriorated. Consequently, the DVD system demands technology for preventing unauthorized copying. The DVDs include DVD-ROMs (DVD read only memory) such as DVD-video, DVD-Rs (DVD recordable) and DVD-RAMs (DVD random access memory).

Generally, content data required to be protected has been encrypted and recorded by a CSS (content scrambling system) in order to prevent unauthorized copy of the content data.

However, once the CSS is breached, the content data can be copied easily. Under such circumstances, an approach to embed copy control information data called CCI as an electronic watermark in each frame of the content data, and manage the copying of the content data onto another recording medium in accordance with the CCI has been developed. The CCI shows one of four copy protection states "copy free", "one copy", "no more copy," and "never copy." Therefore, if a DVD has the content data whose copying is not permitted to protect its copyright, an approach for preventing the copying of the content data to next-generation medium has been developed by encrypting the content data, and embedding the CCI of "never copy" as an electronic watermark in the content data.

However, the CCI can manage only a copy operation, and the CCI is not directed to manage the reproduction of a pirated edition of content data illicitly recorded on a medium. A pirated edition of DVD is usually produced from a DVD-ROM having encrypted content data and the CCI of "never copy." The pirated edition of DVD has the CCI embedded as an electronic watermark, so that the CCI is copied together with the content data onto another recording medium. The content data itself is decrypted during the copy process, and then recorded onto the recording medium. Therefore, most of pirated edition of DVDs have the non-encrypted content data, while having the CCI which indicates the prohibition of copying.

An approach for prohibiting the reproduction of the pirated edition of DVD has been proposed. In this approach, when the content data being reproduced has the CCI which indicates the prohibition of copying, and the content data is determined to be a non-encrypted one, the DVD containing the above content data is determined to be a pirated edition. And its reproduction is then forced to cease. Most of DVDs which have the CCI of "never copy" have the encrypted content data recorded thereon, so that they can be distinguished from the pirated edition of DVDs by the above approach during the reproduction of the content data.

However, there is an authorized DVD which indicates the prohibition of the copying of the content data, i.e. "never copy," and has the non-encrypted content data recorded thereon. Therefore, when the content data recorded on a DVD is going to be reproduced with reference to a combination of the contents of CCI and the decision as to the encrypted state of the content data, a problem will arise that the copy-non-allowable DVD having non-encrypted content data which can be licitly reproduced is determined to be a pirated edition, thereby being forced to cease its reproduction.

WO 99 22372 A relates to a method and system for transferring information using an encryption mode indicator (EMI). The method and the system provide several secure information communication modes in which data (e.g., representing an audio/visual work) can be transmitted from a source device to a sink device (receiving station) in a number of secure modes: In one secure mode, EMI mode A, the information of the transmission is not allowed to be copied as a whole work; this is the highest level of copy protection. In second secure mode, EMI mode B, the information of the transmission is allowed to be copied once and once only by the sink device. In a third transmission mode, no encryption is used and free copying is available. Depending on which secure mode is selected between mode A and mode B, a different encryption process is used by the source device to encrypt the transmission. Further, depending on which secure mode is selected between mode A and mode B, a different decryption process is used by the sink device to decrypt the transmission. The method may be used for transmissions between a source device and a bit stream recorder which does not have the capability to extract certain encryption information from a packet header. By using different encryption processes for each transmission mode, an unauthorized device placed between the source and the sink devices that alters the EMI code will be unable to thereafter render or record the audio/visual work because the decryption process selected will differ from the encryption process used. In any of the modes the EMI information itself is not encrypted.

### SUMMARY OF THE INVENTION:

The present invention has been made in view of the above-mentioned problems, and provides a recording medium for prohibiting the reproduction of only content data illicitly recorded on a medium, and a reproduction apparatus therefor.

Aspects of the invention are defined in the appended claims.

The discrimination data indicates whether or not the content data has been encrypted during the recording process of the content data. The discrimination data is recorded together with the copy control information data into the content data. Therefore, if the encrypted state of the content data is examined during its reproducing process, the presence or absence of any process of the content data is determined between the recording process of the content data and its reproduction. It should be noted that the above any process includes decryption of the content data.

According to this invention, the discrimination data, which indicates whether or not the content data has been encrypted and recorded in the recording process, is recorded with the copy control information data in the content data. Therefore, the presence or absence of decryption process for the content data after the recording process can be detected, when the content data is reproduced. On the basis of the results of the above detection, the reproduction of a pirated edition of recording medium can be prohibited.

### BRIEF DESCRIPTION OF THE DRAWINGS:

The aforementioned aspects and other features of the invention are explained in the following description, taken in connection with the accompanying drawing figures wherein:
Fig. 1 is a table showing content data managing data invention;
Fig. 2 is a diagram of the content data managing data according to the present invention;
Fig. 3 is a block diagram showing an apparatus for recording content data managing data on a recording medium according to the present invention;
Fig. 4 is a block diagram showing a content data reproducing apparatus according to the present invention;
Fig. 5 is a flow chart of a process for controlling content data reproduction according to the present invention;
Fig. 6 is a flow chart of a process for determining the continuation or prohibition of the content data reproduction according to the present invention; and
Fig. 7 is a table showing the relationship between a reproduction management and the content data managing data of Fig. 6.

### DESCRIPTION OF THE PREFERRED EMBODIMENTS:

The preferred embodiments of the present invention will be described with reference to the drawings. It should be noted that recording media of the present invention include a DVD, a memory, an IC memory and a digital video tape which are recorded by a digital recording system. The DVDs include a DVD-ROM, a DVD-R, and a DVD-RAM.

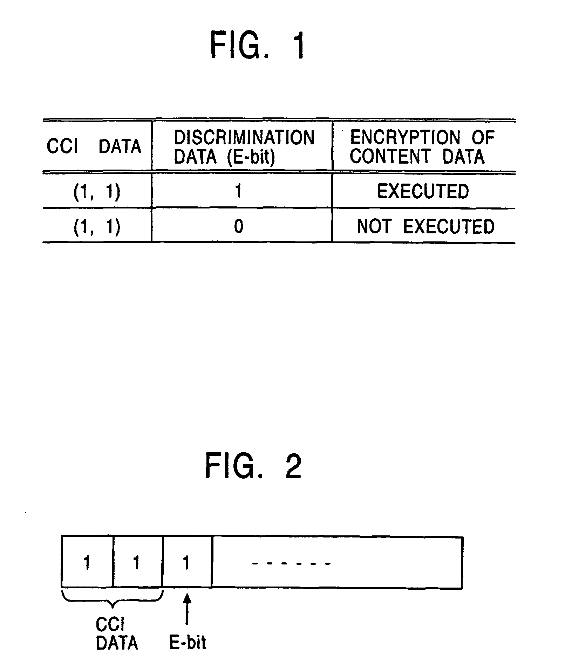

Figs. 1 and 2 are views showing managing data for content data according to the present invention. The recording medium of the present invention has copy control information data (designated as CCI data hereinunder) as content data managing data. The recording medium further has discrimination data (designated as E-bit hereinunder) indicating the encrypted state of the content data recorded on the medium.

The CCI data indicates generation copy management information consisting of two bits; it represents copy control information used when content data in an original recording medium is attempted to be copied onto another recording medium. The CCI data has four different types, i.e. 1) "Never copy (1, 1)" indicating that the copying is prohibited, 2) "One copy (1, 0)" indicating that only one-generation or single copy is permitted, 3) "No more copy (0, 1)" indicating that further copying is not permitted, and 4) "Copy free (0, 0)" indicating free copying. The copy control information data is established by a content data supplier. When the CCI data for the content data indicates "One copy", the generation control information indicating that one-generation copying has been executed is added as an electronic watermark after one-generation copying (single copy) is performed, so that further copying of the content data can not be performed.

The discrimination data indicates information of one bit, for example. The discrimination data shows that the content data stored on the recording medium has been encrypted or not. The discrimination data of a value "1" indicates that the content data has been encrypted during a recording process. The discrimination date of a value "0" indicates that the content data has not been encrypted during the recording process. In an alternative embodiment, it should be noted that the discrimination data may consist of plural bits, and that it may include data concerning a method to encrypt content data.

In the case of a DVD-video usually having content data which is not permitted for the copying, the content data is generally encrypted by scrambling the content data by a CSS system, for example. Therefore, when the CCI data shows "Never copy (1, 1)" with the content data encrypted as shown in Fig. 1, the discrimination data has a value of "1". When the content data is not encrypted, the discrimination data has a value of "0".

As shown in Fig. 2, the CCI data and discrimination data are arranged, for example, in the mentioned order. The data of three bits is embedded as an electronic watermark in each frame of the content data. For example, a DVD-video, which has the content data formed of a movie, are not usually permitted the copying of the content data. The DVD-video has the content data encrypted by the CSS system and recorded on a DVD. Accordingly, the DVD is provided with the CCI data of (1, 1) indicating "Never copy", and the discrimination data of (1) indicating that the content data has been encrypted. That is, the data of three bits (1, 1, 1) is embedded as an electronic watermark in the content data.

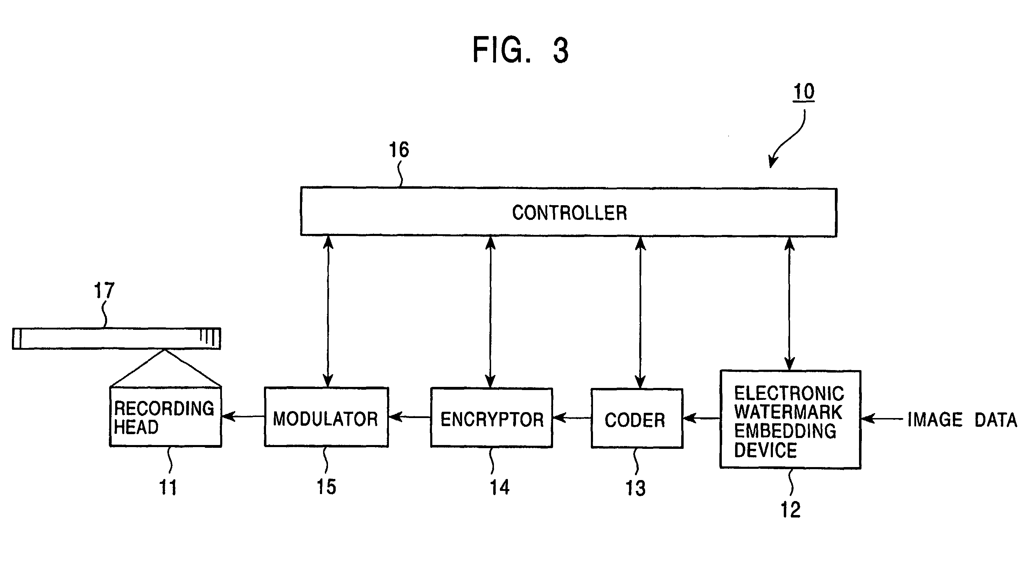

A recording apparatus for embedding discrimination data into the content data and recording the resultant content data on a recording medium will now be described with reference to Fig. 3.

Fig. 3 is a block diagram showing an apparatus 10 according to the present invention for recording discrimination data. Content data requiring the discrimination data according to the present invention is recorded on a DVD as a recording medium. The content data has CCI data of "Never copy" (1, 1) indicating that the content data is not permitted for the copying. Therefore, the apparatus 10 comprises an electronic watermark embedding device 12, a coder 13, an encryptor 14, and a modulator 15 connected in the order between an input and a recording head 11. The input serves to receive image signal constituting content data. The head serves to directly irradiating a recording medium 17 with a recording beam. The apparatus 10 further comprises a controller 16 parallel-connected to the electronic watermark embedding device 12, the coder 13, the encryptor 14 and the modulator 15. The controller is adapted to control the operations of these devices. The coder 13 is adapted to code input data. The encryptor 14 encrypts the input data. The modulator 15 modulates the input data. All of the above devices have well-known structure and operation. The electronic watermark embedding device 12 is adapted to embed CCI data and discrimination data provided by an image data supplier as an electronic watermark into the input data in response to an instruction from the controller.

The operation of the apparatus of Fig. 3 will now be described.

In this embodiment, The CCI data has the code of (1, 1) indicating that the copying is prohibited. The discrimination data has a value of "1" indicating that the content data being recorded is encrypted. The electronic watermark embedding device 12 embeds the CCI data and the discrimination data together as an electronic watermark in each frame of the content data. The coder 13 performs image coding of MPEG2 (Moving Picture Experts Group Phase 2) to generate content data. The encryptor 14 performs encryption of the content data. In this embodiment, since the recording medium is a DVD, the content data is scrambled by a CSS system. It should be noted that the encrypting system is not limited to the CSS system, and that any suitable system can be used for the encryption.

The modulator 15 modulates the content data having the embedded electronic watermark. The modulated content data is then recorded onto a recording medium, i.e., a DVD 17 through the recording head 11.

As described above, the apparatus 10 records the content data together with the CCI data and the discrimination data onto a recording medium such as a DVD, while embedding the CCI data and the discrimination data as an electronic watermark into the content data. A ROM disk such as a DVD-video can be produced by providing an original disk with the recording apparatus of Fig. 3, producing a stamper from the original disk, and producing the ROM disk with the stamper.

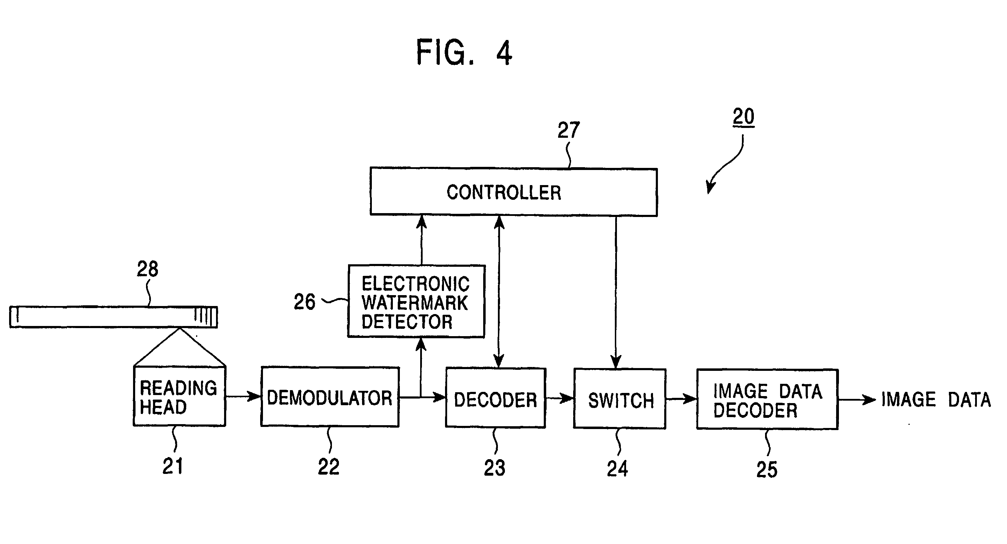

Referring to Fig. 4, a reproduction apparatus according to the present invention will now be described. Fig. 4 is a block diagram showing the reproduction apparatus 20 for reproducing a recording medium including a DVD.

The apparatus 20 comprises a reading head 21, a demodulator 22, a decryption decoder 23, a switch 24, and a image data decoder 25, which are connected in serious in the above order. The reading head 21 receives a reading beam from a recording medium 28 and generates a read signal. The demodulator 22 demodulates the reading signal. The decryption decoder 23 decrypts the received data. The image data decoder 25 decodes the received data into image data. An electronic watermark detector 26 is further provided to extract an electronic watermark from an output of the demodulator 22. A controller 27 is also provided, which is connected to each of the demodulator 22, the decryption decoder 23 and switch 24 to control their operations. The controller 27 receives an output from the electronic watermark detector 26. The switch 24 is adapted to control the connection between an output terminal of the decryption decoder 23 and an input terminal of the decoder 25 in response to an instruction from the controller 27.

When the electronic watermark detector 26 detects the electronic watermark, the controller 27 reads the CCI data and discrimination data related to the content data from the extracted electronic watermark. The controller 27 then determines the encrypted state of the content data, and ascertains the encrypting system for the content data if necessary.

The operation of the apparatus 20 will now be described in detail. When the content data of the DVD 28 set in the apparatus 20 is reproduced, a reading beam from the DVD 28 is received by the reading head 21. The reading signal from the reading head 21 is supplied to the demodulator 22 and then the decryption decoder 23. After the decrypted reading signal is supplied the demodulator 25, the demodulator converts the decrypted reading signal to image data. As described above, the content data is reproduced.

It should be noted that the content data is decrypted in the decoder 23 if the content data from the DVD 28 is in an encrypted state. In parallel with the reproduction of the content data, the electronic watermark detector 26 extracts the electronic watermark from an output of the demodulator 22. The controller 27 reads the CCI data and the discrimination data of the content data being reproduced from the extracted electronic watermark. The controller 27 then compares the discrimination data extracted from the electronic watermark with the current encrypted state of the content data if necessary, thereby controlling an on-off of the switch 24.

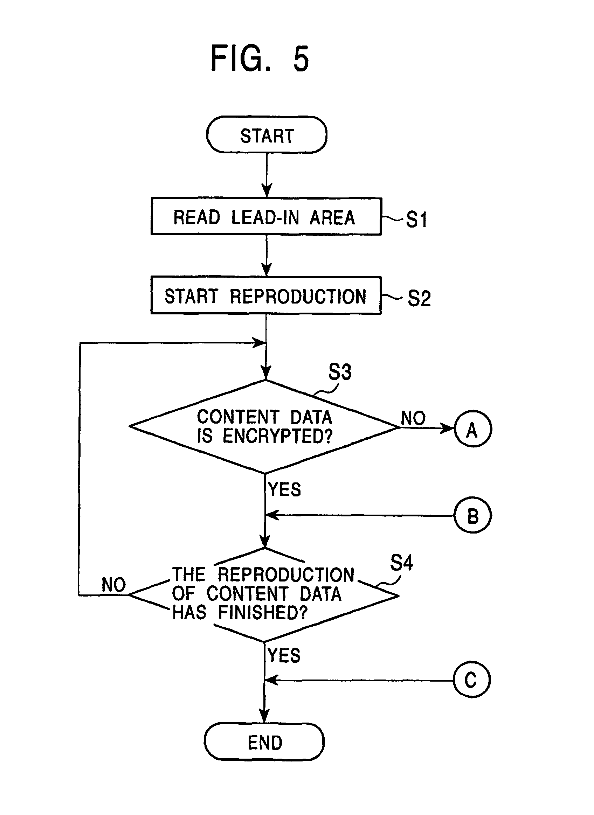

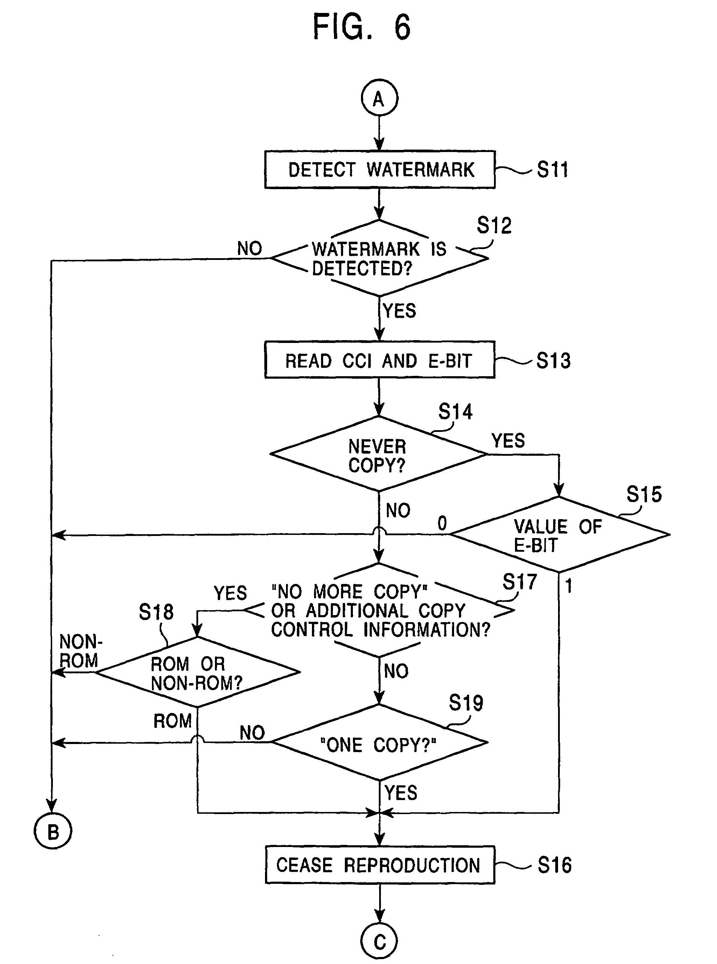

Referring to Figs. 5 and 6, a reproduction control for the reproduction apparatus 20 will now be described in detail. Figs. 5 and 6 show the procedure for controlling an operation of the reproduction apparatus 20.

First, the DVD 28 is set as a recording medium in the reproduction apparatus 20. When the apparatus 20 receives a reproduction command for the content data from an exterior device, the apparatus 20 causes the reading head 21 to move and read a read-in area of the DVD 28 (Step S1), thereby starting the reproduction of the content data (Step S2). The apparatus 20 then determines whether the content data from the DVD 28 is encrypted or not (Step S3). If the content data from the DVD is determined to have been encrypted, for example, the context data has been encrypted by the CSS system (Step S3, YES), the procedure goes to Step S4. In Step 4, the reproduction of the content data is maintained until its finish. Otherwise, if the content data from the DVD is not determined to have been encrypted (Step S3, NO), the procedure goes to a sub procedure shown in Fig. 6.

The procedure of Fig. 6 is an operation for determining the continuation or prohibition of the reproduction of the content data, if the content data from the DVD 28 is not determined to have been encrypted. As shown in Fig. 6, the electronic watermark is detected by extracting itself from the content data (Step S11). If the electronic watermark is detected (Step 12, YES), the controller reads the CCI data and discrimination data from the electronic watermark, and examines the contents of the CCI data and discrimination data (Step S13).

If the read CCI data shows "Never copy" (Step S14, YES), the procedure goes to Step 15, in which a value of the read discrimination data is determined. If the discrimination data has a value of "1", the procedure goes to Step S16, in which the reproduction of the content data is ceased. That is, in Step S15, the value "1" of the discrimination data shows that the content data being reproduced has been encrypted during the recording process in view of the managing data from the electronic watermark of the content data. However, this results in that the value of the discrimination data indicating the encryption during the recording process contradicts the results of the Step S3 which determines that the content data from the DVD has not been encrypted. This means that the content data has been decrypted at any time between the recording of the content data on the DVD and its reproducing. Accordingly, the DVD to be reproduced is determined to be a pirated edition DVD. That is, the content data from the DVD being reproducing is considered to have been illicitly duplicated from the encrypted content data whose copy is not permitted. Therefore, the reproduction of the content data is forced to cease in Step S16.

If the discrimination data has a value of "0" in Step S15, it means that the content data being reproduced has been recorded in a non-encrypted state in view of the managing data for the content data. The information, which indicates that the recording process did not have any encryption, agrees with the result of the,Step S3 indicating that no encryption has been found. Therefore, the procedure goes to Step S4 of Fig. 5, in which the reproduction of the content data is maintained until its finish. That is, since the DVD containing the above content data is determined to be a licit DVD which is not permitted for the copying of the content data and has content data not-encrypted, the reproduction of the content data is maintained until its finish in the Step 4.

If the CCI data shows "No more Copy" and has an additional generation control information (Step S17, YES), the procedure then goes to Step S18, in which a type of the DVD is determined. That is, the Step S18 determines which the DVD is a ROM-type or a non-ROM-type, i.e., if the DVD is recordable or not. If the DVD is determined to be a ROM in Step S18, the procedure goes to Step S16 to prohibit the reproduction of the content data. That is, since it is impossible for a normal recording apparatus to record the content data together with the CCI data on a recording medium or ROM, the DVD being reproduced is determined to be a pirated edition DVD. Therefore, the reproduction of the content data is prohibited. If the DVD is determined to be a non-ROM in Step S18, the content data being reproduced can be determined to be data copied on a DVD, which consists of the stream data requiring the protection. Consequently, the procedure returns to Step 4, in which the reproduction of the content data is maintained until its finish.

If the contents of the read CCI data is "One copy" (Step S19, YES), the procedure goes to Step S16 to prohibit the reproduction of the content data. That is, the CCI data is not usually recorded on a DVD without adding generation control information thereto. Therfore, the detection of CCI data having the contents of "One copy" must be legally wrong as managing data for the content data of the DVD. Thus, a DVD meeting the condition of Step S19 can be determined to be a pirated edition DVD, so that the reproduction of the content data is prohibited.

The reproduction managing method of Figs. 5 and 6 distinguishes an illicit DVD which contains the non-encrypted content data with the CCI data of "No copy" from a pirated edition of DVD containing non-encrypted content data with the CCI data of "No copy", on the reproducing of the content data. Therefore, the reproduction of only the pirated edition of DVD can be prohibited.

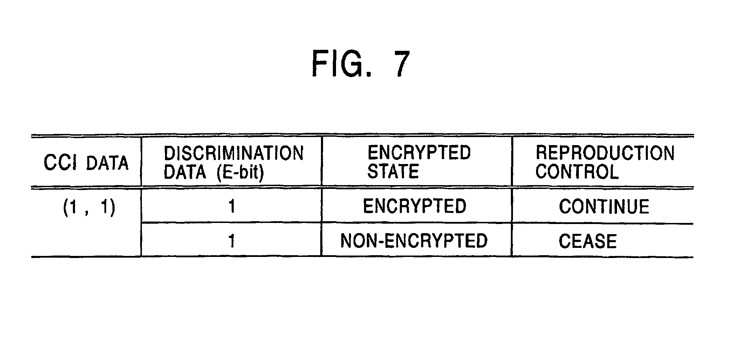

Fig. 7 shows the relationship among the managing data contained in the content data during the recording process, the encrypted state of the reproduced content data, and the reproduction control during the above-described control. If the CCI data shows "No copy," i.e. the content data consists of the code of (1, 1), the presence or absence of the decryption process for the content data at any time between the authorized recording of the content data and its reproduction can be detected by comparing the discrimination data indicating the encryption process during the recording process with the encrypted state of the reproduced content data. That is, as shown in Fig. 7, if the discrimination data has a value of "1", which indicates that the content data has been encrypted during the recording process, and the encryption of the content data is detected during the reproduction process, this means that the content data has not been decrypted between its recording and reproduction. Therefore, the DVD being reproduced is authorized, and its reproduction can be continued. On the other hand, if the discrimination data has a value of "1", which indicates that the content data has been encrypted during the recording process, and any encrypted content data is not detected during the reproduction process, it is clear that the content data has been decrypted between its recording and reproduction. Accordingly, the DVD to be reproduced proves to be a pirated edition of DVD. Thus, the reproduction of only the pirated edition of DVD is prohibited.

Since the managing data for the content data is embedded as an electronic watermark in the content data, it is generally difficult to change the managing data during an unauthorized copying. Therefore, even if the unauthorized copy of the content data is done repeatedly, it is possible to accompany the managing data established during the recording process with the content data without dropping the managing data from the content data.

## Claims

1. A recording medium carrying thereon content data with copy control information data, said copy control information data being for managing copy operation of the content data,
**characterized in that** said content data is encrypted using an encryption process and the content data contains therein discrimination data indicating whether or not the content data has been encrypted using said encryption process.

2. A recording medium according to Claim 1, wherein the discrimination data are embedded as an electronic watermark with the copy control information into the content data.

3. A recording medium according to Claim 1, wherein the recording medium is a DVD.

4. A reproduction apparatus for reproducing content data recorded on a recording medium (28) of claim 1, said apparatus comprising:
reading means (21) for reading the content data from the recording medium;
determining means (27) for determining an encrypted state of the read content data;
detecting means (26) for extracting discrimination data and copy control information data form the read content data, said discrimination data indicating whether or not the content data being reproduced has been encrypted, said copy control information data being usable for managing the copy operation of the content data;
comparing means (27) for comparing the contents of the discrimination data with an output of said determining means (27), if the copy control information data indicates prohibition of a copying operation, and
prohibiting means (24) for prohibiting reproduction of the content data, when the contents of the discrimination data is different form the output of said determining means.

5. A reproduction apparatus according to Claim 4, wherein the discrimination data are embedded as an electronic watermark with the copy control information data in the content data.

6. A reproduction apparatus according to Claim 4, wherein the content data is digitized.

7. A reproduction apparatus according to Claim 4, wherein the recording medium comprises a DVD (28).

8. A reproduction apparatus according to Claim 4, wherein said determining means (27) determines if the content data is encrypted or not.

9. A reproduction apparatus according to Claim 4, wherein said determining means 27 determines how the content data is encrypted.

10. A reproduction apparatus according to Claim 4, wherein said prohibiting means (24) prohibits the reproduction of the content data, when said determining means (27) determines that the read content data read has not been encrypted and the discrimination data indicates that the content data being reproduced is encrypted.

## Patentansprüche

1. Aufzeichnungsmedium, das Content-Daten mit Kopierkontrollinformationsdaten trägt, wobei die Kopierkontrollinformationsdaten dazu dienen, einen Kopiervorgang der Content-Daten zu verwalten,
**dadurch gekennzeichnet, dass** die Content-Daten unter Verwendung eines Verschlüsselungsverfahrens verschlüsselt sind, und dass die Content-Daten Unterscheidungsdaten enthalten, die angeben, ob die Content-Daten unter Verwendung des Verschlüsselungsverfahrens verschlüsselt worden sind oder nicht.

2. Aufzeichnungsmedium nach Anspruch 1, wobei die Unterscheidungsdaten als elektronisches Wasserzeichen mit der Kopierkontrollinformation in den Content-Daten eingebettet sind.

3. Aufzeichnungsmedium nach Anspruch 1, wobei das Aufzeichnungsmedium eine DVD ist.

4. Wiedergabevorrichtung zum Wiedergeben von Content-Daten, die auf einem Aufzeichnungsmedium (28) nach Anspruch 1 aufgezeichnet sind, wobei die Vorrichtung umfasst:
ein Lesemittel (21) zum Lesen der Content-Daten von dem Aufzeichnungsmedium,
ein Bestimmungsmittel (27) zum Bestimmen eines Verschlüsselungszustandes der gelesenen Content-Daten,
ein Detektionsmittel (26) zum Extrahieren von Unterscheidungsdaten und Kopierkontrollinformationsdaten von den gelesenen Content-Daten, wobei die Unterscheidungsdaten angeben, ob die wiedergegebenen Content-Daten verschlüsselt worden sind oder nicht, wobei die Kopierkontrollinformationsdaten zur Verwaltung des Kopiervorganges der Content-Daten verwendbar sind,
ein Vergleichsmittel (27) zum Vergleichen der Inhalte der Unterscheidungsdaten mit einer Ausgabe des Bestimmungsmittels (27), wenn die Kopierkontrollinformationsdaten ein Verbot eines Kopiervorganges angeben, und
ein Verbotsmittel (24) zum Verbieten einer Wiedergabe der Content-Daten, wenn die Inhalte der Unterscheidungsdaten sich von der Ausgabe des Bestimmungsmittels unterscheiden.

5. Wiedergabevorrichtung nach Anspruch 4, wobei die Unterscheidungsdaten als elektronisches Wasserzeichen mit den Kopierkontrollinformationsdaten in den Content-Daten eingebettet sind.

6. Wiedergabevorrichtung nach Anspruch 4, wobei die Content-Daten digitalisiert sind.

7. Wiedergabevorrichtung nach Anspruch 4, wobei das Aufzeichnungsmedium eine DVD (28) umfasst.

8. Wiedergabevorrichtung nach Anspruch 4, wobei das Bestimmungsmittel (27) bestimmt, ob die Content-Daten verschlüsselt sind oder nicht.

9. Wiedergabevorrichtung nach Anspruch 4, wobei das Bestimmungsmittel (27) bestimmt, wie die Content-Daten verschlüsselt sind.

10. Wiedergabevorrichtung nach Anspruch 4, wobei das Verbotsmittel (24) die Wiedergabe der Content-Daten verbietet, wenn das Bestimmungsmittel (27) bestimmt, dass die gelesenen Content-Daten nicht verschlüsselt worden sind, und die Unterscheidungsdaten angeben, dass die wiedergegebenen Content-Daten verschlüsselt sind.

## Revendications

1. Support d'enregistrement portant sur lui des données de contenu avec des données d'informations de commande de copie, lesdites données d'informations de commande de copie servant à gérer une opération de copie des données de contenu,
**caractérisé en ce que** lesdites données de contenu sont cryptées au moyen d'un traitement de cryptage et **en ce que** les données de contenu contiennent dans celles-ci des données de discrimination indiquant si oui ou non les données de contenu ont été cryptées au moyen dudit traitement de cryptage.

2. Support d'enregistrement selon la revendication 1, dans lequel les données de discrimination sont incorporées sous la forme d'un filigrane électronique aux informations de commande de copie dans les données de contenu.

3. Support d'enregistrement selon la revendication 1, dans lequel le support d'enregistrement est un DVD.

4. Appareil de reproduction pour reproduire des données de contenu enregistrées sur un support d'enregistrement (28) selon la revendication 1, ledit appareil comprenant :
un moyen de lecture (21) pour lire les données de contenu depuis le support d'enregistrement ;
des moyens de détermination (27) pour déterminer un état crypté des données de contenu lues ;
un moyen de détection (26) pour extraire des données de discrimination et des données d'informations de commande de copie des données de contenu lues, lesdites données de discrimination indiquant si oui ou non les données de contenu reproduites ont été cryptées, lesdites données d'informations de commande de copie étant utilisables pour gérer l'opération de copie des données de contenu ;
un moyen de comparaison (27) pour comparer les contenus des données de discrimination à une sortie dudit moyen de détermination (27), si les données d'informations de commande de copie indiquent que l'opération de copie est inhibée, et
un moyen d'inhibition (27) pour inhiber la reproduction des données de contenu lorsque le contenu des données de discrimination est différent de la sortie dudit moyen de détermination.

5. Appareil de reproduction selon la revendication 4, dans lequel les données de discrimination sont incorporées sous la forme d'un filigrane électronique aux données d'informations de commande de copie dans les données de contenu.

6. Appareil de reproduction selon la revendication 4, dans lequel les données de contenu sont numérisées.

7. Appareil de reproduction selon la revendication 4, dans lequel le support d'enregistrement comprend un DVD (28).

8. Appareil de reproduction selon la revendication 4, dans lequel ledit moyen de détermination (27) détermine si oui ou non les données de contenu sont cryptées.

9. Appareil de reproduction selon la revendication 4, dans lequel ledit moyen de détermination (27) détermine comment les données de contenu sont cryptées.

10. Appareil de reproduction selon la revendication 4, dans lequel ledit moyen d'inhibition (24) inhibe la reproduction des données de contenu lorsque ledit moyen de détermination (27) détermine que les données de contenu lues n'ont pas été cryptées et lorsque les données de discrimination indiquent que les données de contenu reproduites sont cryptées.
